# FASCICULE DE BREVET EUROPEEN

(11) **EP 3 917 805 B1**
(45) Date de publication et mention de la délivrance du brevet: **07.08.2024**
(21) Numéro de dépôt: 20707497.2
(22) Date de dépôt: 24.01.2020
(51) Int. Cl.: B60R 13/02, B60R 13/04

(54) **ENJOLIVEUR DE MONTANT DE VÉHICULE, À PIÈCE D'ÉTANCHÉITÉ**
FAHRZEUGHALTERUNG MIT DICHTUNGSTEIL
VEHICLE MOUNT TRIM WITH SEALING PART

(30) Priorité: 30.01.2019 FR 1900843
(43) Date de publication de la demande: 08.12.2021
(73) Titulaire: Stellantis Auto SAS, 78300 Poissy (FR)
(72) Inventeur: RIVIERRE, Laurent, 75015 PARIS (FR); MOREAU, Ludovic, 94400 VITRY SUR SEINE (FR)
(86) Numéro de dépôt international: PCT/FR2020/050106
(87) Numéro de publication internationale: WO 2020/157417

(56) Documents cités:
- FR-A1- 3 063 695
- JP-B2- 4 329 213
- US-A1- 2013 020 822
- US-B2- 8 414 059

## Description

### Domaine technique de l'invention

La présente invention revendique la priorité de la demande française 1900843 déposée le 30 Janvier 2019.

L'invention concerne les enjoliveurs qui sont destinés à équiper des montants de structure de véhicule.

### Etat de la technique

Certains véhicules, généralement de type automobile, comprennent une structure (ou caisse) réalisée par assemblage de pièces métalliques (par exemple en tôle) qui, pour certaines, participent à la délimitation d'un habitacle. Certaines de ces pièces métalliques sont des montants (ou « pieds ») droit et gauche. Le pilotage du ferrage de ces montants nécessite la définition dans chacun de ces derniers d'un trou traversant, ci-après dit de ferrage. La forme de ce trou traversant de ferrage varie généralement selon que le montant est destiné à être installé dans une partie avant ou arrière. Ainsi, le trou traversant de ferrage d'un montant avant est généralement plat et circulaire, alors que le trou traversant de ferrage d'un montant arrière est généralement une boutonnière de forme oblongue.

Le document US20130020822 décrit une structure de hayon arrière de véhicule comportant des ouvertures avec lesquelles coopèrent des moyens de fixation d'un enjoliveur de sorte à permettre la fixation dudit enjoliveur sur la structure dudit hayon arrière. Le document JP4329219 décrit une garniture se fixant sur un pied milieu à l'aide d'un élément de fixation traversant un trou disposé dans le pied milieu, l'élément de fixation comprenant une partie pressante s'appuiant sur la surface du pied milileu autour du trou.

Il est ici rappelé que le ferrage est la partie du procédé de fabrication pendant laquelle on réalise les liaisons, par points de soudure électrique, entre les différentes pièces de tôle qui constituent le véhicule. Par ailleurs, le pilotage du ferrage concerne les moyens qui sont utilisés pour réaliser ce ferrage (qu'ils soient robotisés ou manuels). Il est en effet nécessaire de déplacer un côté de la structure délimitant l'habitacle au moyen de pilotes (ou doigts) passant au-travers de trous traversants de ferrage (généralement un rond à l'avant et un oblong à l'arrière).

Généralement, le trou traversant de ferrage est défini dans une zone où de l'eau peut rentrer mais sans pouvoir ensuite pénétrer dans l'habitacle car cette zone est ouverte sur l'extérieur (« zone humide »), si bien qu'il n'est pas nécessaire de l'obturer pour éviter une fuite dans l'habitacle. Cependant, dans certains cas on est contraint de réaliser le trou traversant de ferrage dans une zone où passe de l'eau qui peut ensuite pénétrer dans l'habitacle, et donc il est nécessaire d'obturer ce trou traversant de ferrage pour empêcher toute entrée d'eau dans l'habitacle. Lorsque le trou traversant de ferrage est circulaire, on peut l'obturer de façon étanche au moyen d'un obturateur thermo-fusible standard, bien que cela nécessite une opération supplémentaire d'un technicien sur la ligne de peinture. Mais, lorsque le trou traversant de ferrage est une boutonnière de forme oblongue, on ne peut plus l'obturer au moyen d'un obturateur thermo-fusible standard et donc on est contraint de définir un obturateur dédié et d'installer ce dernier lors d'une étape additionnelle sur la ligne de peinture, ce qui est chronophage et onéreux.

L'invention a donc notamment pour but d'améliorer la situation.

### Présentation de l'invention

Elle propose notamment à cet effet un enjoliveur, d'une part, destiné à équiper un montant d'une structure d'un véhicule dans lequel sont définis des premiers trous traversants et un second trou traversant pour le pilotage du ferrage, et, d'autre part, comprenant une face interne munie d'éléments de fixation destinés à traverser les premiers trous traversants pour le solidariser fixement au montant.

Cet enjoliveur se caractérise par le fait qu'il comprend une pièce solidarisée à sa face interne dans une zone qui est destinée à être placée devant le second trou traversant afin de l'obturer totalement de façon étanche. La pièce est réalisée en mousse à cellules fermées ou semi-fermées.

Ainsi, on n'a plus besoin de fabriquer des obturateurs dédiés respectivement aux différents types de trou traversant de ferrage, tout comme on n'a plus besoin d'étape supplémentaire sur la ligne de peinture pour installer chaque obturateur dédié. L'étanchéité est en effet obtenue lors de l'installation de l'enjoliveur sur le montant associé.

L'enjoliveur selon l'invention peut comporter d'autres caractéristiques qui peuvent être prises séparément ou en combinaison, et notamment :
- la pièce peut être solidarisée par collage sur sa face interne ;
- les éléments de fixation peuvent être des clips.

L'invention propose également un véhicule, éventuellement de type automobile, et comprenant une structure comportant au moins deux montants droit et gauche dans chacun desquels sont définis des premiers trous traversants et un second trou traversant pour le pilotage du ferrage. Ce véhicule se caractérise par le fait qu'il comprend aussi au moins deux enjoliveurs solidarisés fixement et respectivement aux montants. Chaque enjoliveur comprend une face interne munie d'éléments de fixation destinés à traverser les premiers trous traversants pour le solidariser fixement au montant, et comprend une pièce solidarisée à sa face interne dans une zone qui est destinée à être placée devant le second trou traversant afin de l'obturer totalement de façon étanche. La pièce est réalisée en mousse à cellules fermées ou semi-fermées. L'enjoliveur peut aussi comprendre d'autres caractéristiques présentées ci-avant.

Par exemple, les montants peuvent participer à la délimitation d'une partie arrière d'un habitacle.

### Brève description des figures

D'autres caractéristiques et avantages de l'invention apparaîtront à l'examen de la description détaillée ci-après, et des dessins annexés, sur lesquels :
[Fig. 1] illustre schématiquement, dans une vue de côté, une partie d'une structure de véhicule automobile comprenant un montant arrière équipé d'un enjoliveur selon l'invention,
[Fig. 2] illustre schématiquement, dans une vue de côté en transparence, la partie de la structure de véhicule automobile de la figure 1, et

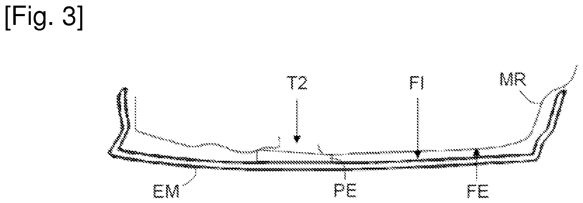

[Fig. 3] illustre schématiquement, dans une vue en coupe, la partie de la structure de véhicule automobile de la figure 1 dans la zone comprenant le second trou traversant obturé par la pièce de l'enjoliveur qui assure son étanchéité.

### Description détaillée de l'invention

L'invention a notamment pour but de proposer un enjoliveur EM destiné à équiper un montant MR d'une structure (ou caisse) SV d'un véhicule, en assurant l'étanchéité au niveau d'un (second) trou traversant T2 (de ferrage) que comprend ce montant MR.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout type de véhicule comportant une structure (ou caisse) réalisée par assemblage de pièces métalliques (par exemple en tôle) qui, pour certaines, participent à la délimitation d'un habitacle et constituent des montants (ou pieds) droit et gauche. Par conséquent, l'invention concerne au moins les véhicules terrestres (et notamment les véhicules automobiles, les véhicules utilitaires, les engins de voirie, les camions, et les cars (ou bus)).

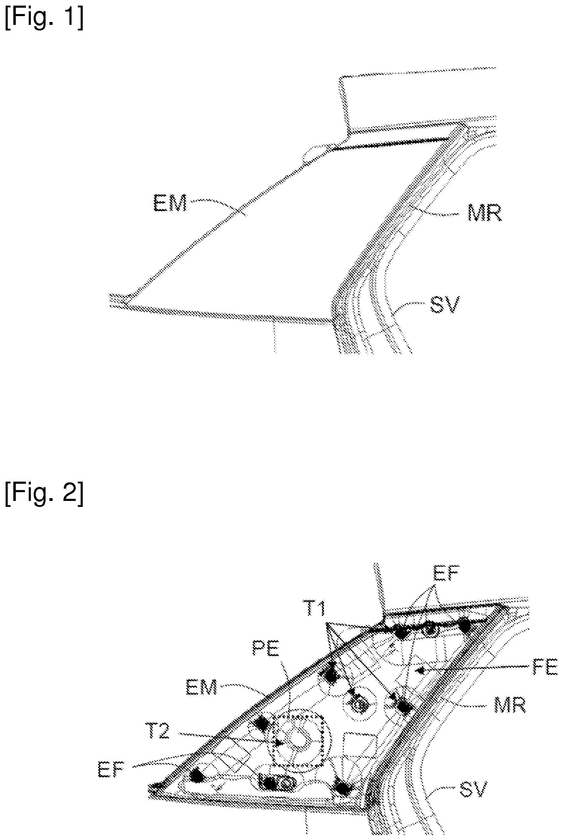

On a schématiquement représenté sur les figures 1 et 2 une partie d'une structure SV d'un véhicule (ici de type automobile) comprenant un montant arrière MR équipé sur sa face externe FE d'un enjoliveur EM selon l'invention. On comprendra que cette structure SV comprend dans la réalité au moins deux montants arrière MR droit et gauche qui participent à la délimitation de la partie arrière de l'habitacle. Ici, seul le montant arrière droit est illustré, et il constitue ce que l'homme de l'art appelle une custode.

On notera que l'invention concerne tout montant d'une structure de véhicule dès lors qu'il comprend un trou traversant servant au pilotage du ferrage et par lequel peut passer de l'eau issue de l'extérieur et qu'il doit être équipé d'un enjoliveur afin d'assurer l'étanchéité de ce trou traversant de ferrage.

Comme illustré en transparence sur la figure 2, le montant MR comprend des premiers trous traversants T1 pour la fixation de l'enjoliveur EM et un second trou traversant T2 pour le pilotage de son ferrage. Ce second trou traversant T2 est défini dans une zone où peut passer de l'eau provenant de l'extérieur.

Par exemple, et comme illustré non limitativement sur la figure 2, ce second trou traversant T2 peut être une boutonnière de forme oblongue. Mais cela n'est pas obligatoire. En effet, il (T2) pourrait être plat et circulaire.

Egalement comme illustré en transparence sur la figure 2, un enjoliveur EM, selon l'invention, comprend une face interne FI destinée à être orientée vers la face externe FE du montant MR et munie d'éléments de fixation EF qui sont destinés à traverser les premiers trous traversants T1 pour solidariser fixement l'enjoliveur EM à ce montant MR. De plus, cet enjoliveur EM comprend une pièce PE qui est solidarisée à sa face interne FI dans une zone destinée à être placée devant le second trou traversant T2 afin de l'obturer totalement de façon étanche.

On comprendra que l'étanchéité résulte ici du plaquage de la pièce PE contre le montant MR par la solidarisation de l'enjoliveur EM à ce dernier (MR). Cela impose que l'épaisseur initiale de la pièce PE soit supérieure à la distance séparant la face interne FI de l'enjoliveur EM de la face externe FE du montant MR dans la zone où est défini le second trou traversant T2. La pièce PE doit en effet être « en interférence » (c'est-à-dire comprimée contre la tôle (ici le montant MR)).

Grâce à cette pièce PE initialement solidarisée fixement à l'enjoliveur EM, on n'a plus besoin de fabriquer des obturateurs dédiés respectivement aux différents types de trou traversant de ferrage (T2), tout comme on n'a plus besoin d'étape supplémentaire sur la chaîne de montage pour installer chaque obturateur dédié puisque l'étanchéité est obtenue lors de l'installation de l'enjoliveur EM sur le montant MR associé.

Par exemple, la pièce PE peut être réalisée en mousse à cellules fermées ou semi-fermées. Cela permet en effet d'éviter que la mousse se gorge d'eau. Mais on notera que cette mousse doit être compressée sur la tôle (le montant MR) et donc au nominal en interférence. Toute mousse respectant la préconisation sur les cellules (fermées ou semi-fermées) et ayant une raideur adaptée (c'est-à-dire suffisante pour assurer le plaquage et donc l'étanchéité mais pas trop importante pour ne pas induire des efforts de montage trop élevés) peut être ici utilisée.

On notera que la pièce PE peut être solidarisée par collage sur la face interne FI de l'enjoliveur EM. Ce collage peut se faire au moyen d'au moins une bande adhésive double face ou d'une colle.

On notera également que les éléments de fixation EF (qui assurent la solidarisation fixe de l'enjoliveur EM au montant MR) peuvent, par exemple, être des clips étanches et dans ce cas les pilotes de la pièce sur la tôlerie doivent avoir une mousse périphérique faisant de l'étanchéité.

On notera également que l'enjoliveur EM peut, par exemple, être réalisé par moulage (ou injection) d'une matière plastique (ou synthétique), comme par exemple de l'ABS/PC (« Acrylonitrile Butadiène Styrène/Polycarbonate ») ou du polypropylène (de préférence chargé en fibres).

## Revendications

1. Enjoliveur (EM) pour un montant (MR) d'une structure d'un véhicule dans lequel sont définis des premiers trous traversants (T1) et un second trou traversant (T2) pour le pilotage du ferrage, ledit enjoliveur (EM) comprenant une face interne (FI) munie d'éléments de fixation (EF) destinés à traverser lesdits premiers trous traversants (T1) pour solidariser fixement ledit enjoliveur (EM) audit montant (MR), et munie d'une pièce (PE) solidarisée à ladite face interne (FI) dans une zone destinée à être placée devant ledit second trou traversant (T2) afin de l'obturer totalement de façon étanche, **caractérisé en ce que** ladite pièce (PE) est réalisée en mousse à cellules fermées ou semi-fermées.

2. Enjoliveur selon la revendication 1, **caractérisé en ce que** ladite pièce (PE) est solidarisée par collage sur ladite face interne (FI).

3. Enjoliveur selon l'une des revendications 1 à 2, **caractérisé en ce que** lesdits éléments de fixation (EF) sont des clips.

4. Véhicule comprenant une structure comportant au moins deux montants (MR) droit et gauche dans chacun desquels sont définis des premiers trous traversants (T1) et un second trou traversant (T2) pour le pilotage du ferrage, au moins deux enjoliveurs (EM) comprenant chacun une face interne (FI) munie d'éléments de fixation (EF) destinés à traverser lesdits premiers trous traversants (T1) pour solidariser fixement ledit enjoliveur (EM) audit montant (MR), et munie d'une pièce (PE) solidarisée à ladite face interne (FI) dans une zone destinée à être placée devant ledit second trou traversant (T2) afin de l'obturer totalement de façon étanche, les deux enjoliveurs étant solidarisés fixement et respectivement auxdits montants (MR), **caractérisé en ce que** l'enjoliveur (EM) est suivant l'une des revendications 1 à 3.

5. Véhicule selon la revendication 4, **caractérisé en ce que** lesdits montants (MR) participent à la délimitation d'une partie arrière d'un habitacle.

6. Véhicule selon l'une des revendications 4 ou 5 , **caractérisé en ce qu'**il est de type automobile.

## Patentansprüche

1. Zierkappe (EM) für einen Pfosten (MR) einer Fahrzeugstruktur, in der erste Durchgangslöcher (T1) und ein zweites Durchgangsloch (T2) zur Steuerung des Beschlags definiert sind, wobei die Zierkappe (EM) eine Innenfläche (FI) aufweist, die mit Befestigungselementen (EF) zum Durchqueren der ersten Durchgangslöcher (T1) versehen ist, um die Zierkappe (EM) fest mit dem Pfosten (MR) zu verbinden, und mit einem Teil (PE) versehen ist, das mit der Innenfläche (FI) in einem Bereich fest verbunden ist, der vor dem zweiten Durchgangsloch (T2) angeordnet werden soll, um sie zu befestigen Völlig dicht abschließen, **dadurch gekennzeichnet, dass** das Teil (PE) aus einem Schaumstoff mit geschlossenen oder halbgeschlossenen Zellen besteht.

2. Zierkappe nach Anspruch 1, **dadurch gekennzeichnet, dass** das Teil (PE) durch Kleben mit der Innenfläche (FI) verbunden ist.

3. Zierkappe nach einem der Ansprüche 1 bis 2, **dadurch gekennzeichnet, dass** die Befestigungselemente (EF) Clips sind.

4. Fahrzeug mit einer Struktur mit mindestens zwei rechten und linken Pfosten (MR), in denen jeweils erste Durchgangslöcher (T1) und ein zweites Durchgangsloch (T2) zur Steuerung des Beschlags definiert sind, wobei mindestens zwei Radkappen (EM) jeweils eine Innenfläche (FI) aufweisen, die mit Befestigungselementen (EF) zum Durchqueren der ersten Durchgangslöcher (T1) versehen ist, um die Radkappe (EM) fest mit dem Pfosten (MR) zu verbinden, und mit einem Teil (PE) versehen sind, das mit der Innenfläche (FI) in einem Bereich verbunden ist, der vor dem zweiten Durchgangsloch (T2) angeordnet werden soll, um Völlig dicht verschließen, wobei die beiden Zierleisten fest und jeweils mit den Stützen (MR) verbunden sind, **dadurch gekennzeichnet, dass** die Zierleiste (EM) nach einem der Ansprüche 1 bis 3 ausgebildet ist.

5. Fahrzeug nach Anspruch 4, **dadurch gekennzeichnet, dass** die Stützen (MR) an der Begrenzung eines hinteren Teils eines Fahrgastraums beteiligt sind.

6. Fahrzeug nach einem der Ansprüche 4 oder 5, **dadurch gekennzeichnet, dass** es ein Kraftfahrzeug ist.

## Claims

1. Cover (EM) for an upright (MR) of a structure of a vehicle in which are defined first through-holes (T1) and a second through-hole (T2) for controlling the fitting, said cover (EM) comprising an inner face (FI) provided with fastening elements (EF) intended to pass through said first through-holes (T1) to fixedly secure said cover (EM) to said upright (MR), and provided with a part (PE) secured to said inner face (FI) in a zone intended to be placed in front of said second through-hole (T2) in order to completely close it off sealed, **characterized in that** said part (PE) is made of foam with closed or semi-closed cells.

2. A trim according to claim 1, **characterized in that** said part (PE) is secured by gluing to said inner face (FI).

3. Trim according to one of claims 1 to 2, **characterized in that** the said fixing elements (EF) are clips.

4. Vehicle comprising a structure comprising at least two right and left uprights (MR.) in each of which are defined first through holes (T1) and a second through hole (T2) for controlling the fitting, at least two trim members (EM) each comprising an inner face (FI) provided with fastening elements (EF) intended to pass through said first through holes (T1) in order to fixedly fasten said trim member (EM) to said upright (MR), and provided with a part (PE) fastened to said inner face (FI) in a zone intended to be placed in front of said second through hole (T2) in order to completely close it off sealed, the two trim members being fixedly attached to and respectively to said uprights (MR), **characterized in that** the trim member (EM) is according to one of claims 1 to 3

5. Vehicle according to claim 4, **characterized in that** the said uprights (MR) participate in the delimitation of a rear part of a passenger compartment.

6. Vehicle according to either of claims 4 and 5, **characterized in that** it is of the motor vehicle type.
